Europäisches Patentamt

European Patent Office

Office européen des brevets

(19)

(11) **EP 1 042 664 B1**

(12) **EUROPÄISCHE PATENTSCHRIFT**

(45) Veröffentlichungstag und Bekanntmachung des Hinweises auf die Patenterteilung:
**31.10.2001 Patentblatt 2001/44**

(21) Anmeldenummer: **98965868.7**

(22) Anmeldetag: **23.12.1998**

(51) Int Cl.$^7$: **G01N 21/64**

(86) Internationale Anmeldenummer:
**PCT/EP98/08425**

(87) Internationale Veröffentlichungsnummer:
**WO 99/34195 (08.07.1999 Gazette 1999/27)**

(54) **VERFAHREN ZUM NACHWEIS VON REAKTIONEN MITTELS KOINZIDENZANALYSE**

METHOD FOR DETECTING REACTIONS BY MEANS OF COINCIDENCE ANALYSIS

PROCEDE DE MISE EN EVIDENCE DE REACTIONS PAR ANALYSE DE COINCIDENCES

(84) Benannte Vertragsstaaten:
**AT BE CH CY DE DK ES FI FR GB GR IE IT LI LU MC NL PT SE**

(30) Priorität: **23.12.1997 DE 19757740
26.10.1998 DE 19849265**

(43) Veröffentlichungstag der Anmeldung:
**11.10.2000 Patentblatt 2000/41**

(73) Patentinhaber: **Evotec BioSystems AG
22525 Hamburg (DE)**

(72) Erfinder:
• **EIGEN, Manfred**
  **D-37077 Göttingen (DE)**
• **WINKLER, Thorsten**
  **D-37077 Göttingen (DE)**
• **STEPHAN, Jens**
  **D-37077 Göttingen (DE)**
• **SCHWILLE, Petra**
  **D-37077 Göttingen (DE)**
• **KOLTERMANN, Andre**
  **D-37077 Göttingen (DE)**
• **KETTLING, Ulrich**
  **D-37077 Göttingen (DE)**
• **DÖRRE, Klaus**
  **D-37077 Göttingen (DE)**
• **BIESCHKE, Jan**
  **D-37077 Göttingen (DE)**

(74) Vertreter:
**Meyers, Hans-Wilhelm, Dr.Dipl.-Chem. et al
Patentanwälte
von Kreisler-Selting-Werner
Postfach 10 22 41
50462 Köln (DE)**

(56) Entgegenhaltungen:
**EP-A- 0 359 681        EP-A- 0 836 090
EP-A- 0 884 583**

EP 1 042 664 B1

**Beschreibung**

Die vorliegende Erfindung betrifft ein Verfahren zum Nachweis von Assoziations-, Dissoziations-, Verknüpfungs- oder Spaltreaktionen sowie Konformationsänderungen mittels Koinzidenzanalyse.

Das Auffinden von Molekülen mit spezifischen Eigenschaften, wie Bindungs-, Inhibitions- oder katalytischen Eigenschaften, ist eine zentrale Aufgabe in der Wirkstoffentwicklung und in biotechnologischen Anwendungen. Moleküle mit derartigen Eigenschaften können entweder entdeckt oder entworfen werden. In diesem Sinne bedeutet "Entdecken" die Isolierung und das Screening von Substanzen, während das molekulare Design auf rationale oder evolutive Techniken zurückgreift. Das rationale Design erfordert fundierte Einblicke in die molekulare Biophysik, um eine Vorhersage der Struktur-Funktion-Beziehung zu ermöglichen. Im Gegensatz dazu werden im evolutiven Design Prinzipien der Darwin'schen Evolution auf molekularer Ebene angewendet und neue bzw. veränderte Moleküle durch eine Kombination von Mutation, Amplifikation und Selektion erzeugt. Die Anwendung evolutiver Techniken in der Biotechnologie - sog. evolutive Biotechnologie - wurde von Eigen und Gardiner zu Beginn der achtziger Jahre vorgeschlagen (Pure Appl. Chem. 56, 967-978, 1984) und hat inzwischen eine breite Akzeptanz gefunden. Leider ist jedoch in vielen evolutiven Ansätzen der Prozeß der Selektion nicht unmittelbar an die Amplifikation geknüpft. Selektionsprozesse müssen daher oftmals künstlich eingeführt werden. Dies kann beispielsweise im sog. Hochdurchsatzscreening (HTS) in Kombination mit einem geeigneten Assay erfolgen.

HTS-Prozesse unterliegen ökonomischen Beschränkungen. Zur Prozessierung einer Vielzahl von Proben ist es daher erforderlich, daß die Analysezeit der einzelnen Probe extrem gering ist. In den letzten Jahren erfolgten daher große Anstrengungen in der Miniaturisierung, Parallelisierung und Automatisierung der Screeningtechnologie sowie in der Entwicklung von homogenen Assays und der Integration hochsensitiver und schnell arbeitender Detektionsvorrichtungen. Unter der Vielzahl alternativer Detektionsprinzipien haben fluoreszenzbasierende Techniken - wie Fluoreszenz-Resonanz-Energietransfer (FRET), Fluoreszenzquenching, Fluoreszenzpolarisation, zeitaufgelöste Fluoreszenztechniken und Fluoreszenzkorrelationsspektrokopie (FCS) - starken Anklang gefunden.

Im Rahmen der Fluoreszenzkorrelationsspektroskopie werden Fluoreszenzfluktuationen von einzelnen Molekülen eines insbesondere im Femtoliter-Bereich liegenden Meßvolumenelementes gemessen und z. B. durch Evaluierung der Autokorrelationsfunktion der Einfarben-Fluoreszenzsignale molekulare Diffusionscharakteristiken ermittelt. Die Grundlagen der FCS und ihre Anwendung auf insbesondere biologische Fragestellungen sind in vielfältigen Artikeln und Patentanmeldungen beschrieben (z. B. Eigen und Rigler, Proc. Natl. Acad. Sci. USA 91, 5740 - 5747, 1994; WO 94/16313).

Die Fluoreszenzkreuzkorrelationsspektroskopie oder sog. Zweifarben-FCS ist ebenfalls Gegenstand einiger Veröffentlichungen. Die Zweifarben-FCS wurde zu Beginn der neunziger Jahre von Eigen und Rigler (Proc. Natl. Acad. Sci. USA 91, 5740 - 5747) vorgeschlagen und wird ebenfalls in der unter WO 94/16313 veröffentlichten internationalen Patentanmeldung erörtert. Applikationen dieser Technik bei der Untersuchung von Hybridisierungskinetiken wurden von Schwille et al. (Biophysical Journal, Vol. 72, 1878 - 1886, 1997) beschrieben. Die in der Literatur beschriebenen Anwendungen der Fluoreszenzkreuzkorrelation zeigen, daß Analysezeiten von 30 bis 120 s notwendig sind, um eine hinreichend genaue Bestimmung der Amplituden der Kreuzkorrelationsfunktion und Diffusionszeiten zu ermöglichen. Derartig lange Analysezeiten sind nicht oder nur bedingt für ein Hochdurchsatzscreening geeignet.

In der Literatur sind ferner verschiedene Signalverarbeitungsverfahren beschrieben worden, um Signale vom Hintergrundrauschen zu trennen.

In Tellinghuisen et al. (Analytical Chemistry 66, No. 1, 64 - 72, 1994) wird ein Verfahren für die Fluoreszenz-Lebensdauerspektroskopie beschrieben, das dazu dienen soll, die von der Lichtquelle, in diesem Fall von einem Laser stammenden Photonen aus dem Gesamtsignal herauszufiltern. Dazu wird der Signalzählerstrom mit dem Triggersignal, d.h. dem Anregungspuls des gepulsten Lasers, verglichen. Kommt ein Photon im Rahmen der Lichtgeschwindigkeit zeitgleich mit dem Anregungspuls an, so wird es als Streulichtpuls identifiziert und gelöscht.

In Keller et al. (Applied Spectroscopy 50, No. 7, 12A - 32A, 1996) wird ein weiteres Verfahren für die Analyse von Fluoreszenzlebensdauern beschrieben. In diesem Verfahren werden die Zeitdifferenzen zwischen am Detektor eintreffenden, zeitlich aufeinanderfolgenden Impulsen bestimmt, indem die Anzahl von Triggerpulsen, die mit 100 kHz erzeugt werden, zwischen zwei aufeinanderfolgenden Photonen gezählt wird. Diese Zahlen werden in aufeinander folgenden Kanälen eines MCS (engl. "multichannel scaler") gespeichert. Anschließend wird dieses MCS-Signal einer zeitlichen, schnellen Fouriertransformation (FFT) zur Glättung unterworfen. Liegen nach der FFT wenigstens 5 Zeitdifferenzen des geglätteten Signals unterhalb eines visuell bestimmten Schwellenwertes, so wird das Signal für die gesamte Zeitdauer, während der die Zeitdifferenzen kontinuierlich unterhalb des visuell bestimmten Schwellenwertes liegen, als zusammengehörig erachtet und als Fluoreszenzanteil, im wissenschaftlichen Sprachgebrauch seit einiger Zeit "burst" genannt, bewertet. Anschließend wird das so gefilterte Signal in bezug auf die Fluoreszenzlebensdauer ausgewertet. Allerdings verwenden die Autoren hier nur Signalanteile, bei denen mehr als 25 Zeitdifferenzen unterhalb des visuell bestimmten Schwellenwertes liegen.

Aufgabe der folgenden Erfindung ist es, ein Verfahren bereitzustellen, welches bei kleinsten Probenvolumina eine zuverlässige und schnelle Detektion von Assoziations-, Dissoziations-, Verknüpfungs- und Spaltreaktionen sowie Konformationsänderungen ermöglicht.

Die der Erfindung zugrundeliegende Aufgabe wird gelöst durch ein Verfahren mit den Merkmalen des Patentanspruchs 1. Die weiteren Patentansprüche betreffen bevorzugte Ausführungsformen des erfindungsgemäßen Verfahrens.

Die Erfindung betrifft somit ein Verfahren zum Nachweis von Assoziations-, Dissoziations-, Verknüpfungs- oder Spaltreaktionen sowie Konformationsänderungen von Analyten in einer Probe mittels Koinzidenzanalyse, wobei

- die Probe mindestens zwei mit unterschiedlichen Fluoreszenzfarbstoffen markierte Analyte und/oder mindestens einen mit mindestens zwei unterschiedlichen Fluoreszenzfarbstoffen markierten Analyten enthält,
- die Probe zur Anregung der Fluoreszenzemission der mindestens zwei Farbstoffe von mindestens einem Laser beleuchtet wird,
- die von der Probe ausgehenden, aus mindestens einem Meßvolumenelement V stammenden Fluoreszenzsignale mittels mindestens zweier Detektionseinheiten detektiert werden,
- die jeweils in den Detektionseinheiten detektierten Signale oder hiervon abgeleitete Zeitspuren in beliebige, im wesentlichen jedoch simultane, Zeitabschnitte mit frei wählbaren Zeitkanalbreiten zerlegt werden,
- die Anzahl der in mindestens einem Zeitabschnitt enthaltenen Signale und/oder die Zeitintervalle zwischen Signalen in den Zeitabschnitten ermittelt werden,
- für mindestens einen Zeitabschnitt der ersten Detektionseinheit eine Koinzidenzanalyse der ermittelten Daten mit mindestens einem im wesentlichen zeitgleichen Zeitabschnitt der zweiten Detektionseinheit durchgeführt wird,
- mindestens eine Statistik der Resultate der Koinzidenzanalyse erstellt wird, und/oder die Resultate einer Schwellwertanalyse unterzogen werden,
- diese oder mindestens eine Kombination mehrerer Statistiken nach dem Vorhandensein von Merkmalen, welche für eine Assoziations,- Dissoziations,- Verknüpfungs- oder Spaltreaktion oder Konformationsänderungen charakteristisch sind, bewertet wird.

Weiterhin kann es bevorzugt sein, daß die Zeitkanalbreiten größer als die längste Fluoreszenzlebensdauer der mindestens zwei Farbstoffe sind und/ oder die Zeitkanalbreiten kleiner als die Durchtrittszeit des mindestens einen Probenmoleküls durch das Meßvolumen sind.

Die Detektionseinheiten sollten in einer bevorzugten Ausführungsform unterschiedliche spektrale Detektionsempfindlichkeiten aufweisen.

Weiterhin sollte das Meßvolumenelement $V \leq 10^{-12}$ 1 betragen.

Es kann weiterhin bevorzugt sein, die Probe mittels eines Lasers zu beleuchten, der elektromagnetische Strahlung mindestens einer Wellenlänge emittiert, die geeignet ist, die mindestens zwei in der Probe enthaltenen Farbstoffe anzuregen. Es ist jedoch auch möglich, Laser zu verwenden, die mehr als eine Wellenlänge emittieren, oder mehrere Laser zur Anregung der Fluoreszenzemission einzusetzen.

Es kann ebenfalls bevorzugt sein, daß die Koinzidenzanalyse online durchgeführt wird und/oder die Zeit zur Durchführung der jeweiligen Messung während der Messung individuell angepaßt wird.

Weiterhin kann es bevorzugt sein, im Rahmen der Koinzidenzanalyse die Koinzidenz durch Bestimmung der Amplitude G(0) der Kreuzkorrelationsfunktion zu ermitteln.

Es kann ebenfalls bevorzugt sein, im Rahmen der Koinzidenzanalyse die Koinzidenz durch logische UND-Verknüpfung zu ermitteln.

Weiterhin kann es wünschenswert sein, die Koinzidenz durch Multiplikation gemäß nachfolgender Formel zu ermitteln:

$$K_i(n) = \frac{\sum_m \prod_j N(m,j)}{\prod_j \sum_m N(m,j)} \cdot n^{(i-1)}$$

wobei N(m,j) die Anzahl Photonen im Zeitabschnitt m des Detektors j, i die Gesamtzahl der verwendeten Detektionseinheiten und n die Anzahl der Zeitabschnitte innerhalb der Zeitspur bezeichnet.

Es kann auch wünschenswert sein, daß Probenvolumen und Meßvolumen relativ zu einander bewegt werden.

Weiterhin kann es bevorzugt sein, Systeme zu untersuchen, in denen Partikel auftreten, deren Molekulargewicht sich um weniger als den Faktor 2 unterscheidet.

Vorzugsweise umfaßt die Durchführung des erfindungsgemäßen Verfahrens zunächst die Markierung der zu untersuchenden Probenmoleküle durch mindestens zwei mit unterschiedlichen Fluoreszenzfarbstoffen markierte Analyte und /oder einen mit mindestens zwei unterschiedlichen Fluoreszenzfarbstoffen markierten Analyten.

Die spektral unabhängigen Emissionsstrahlungen der mindestens zwei unterschiedlichen Fluoreszenzfarbstoffe werden in einem konfokalen Nachweisverfahren auf unabhängigen Detektoren detektiert, wobei vorzugsweise jedem Farbstoff ein Detektor zugeordnet wird. Die auf den Detektoren erzeugten Photonensignale werden von einer Meßkarte simultan in genausovielen Zeitspuren wie Detektoren aufgenommen und vorzugsweise parallel bzw. simultan mit frei wählbaren Zeitkanalbreiten gerastert. Es werden somit bevorzugt synchronisierte Zeichsen bereitgestellt, die in frei wählbare Zeitkanäle unterteilt sind und in welchen die Photonensignale je nach zeitlichem Eintreffen gespeichert werden.

Es wird erfindungsgemäß die über das statistische Mittel hinausgehende Häufigkeit an koinzidiert in den synchronisierten Zeitspuren auftretenden Signalen mittels eines geeigneten Algorithmus berechnet. In einer bevorzugten Ausführungsform wird diese Koinzidenz $K_i$ durch eine normierte Multiplikation der verwendeten i Detektorkanäle mit frei wählbarer zeitlicher Auflösung berechnet. Hierzu werden bevorzugt jeweils zeitgleiche Kanäle dieser Zeitspuren der verwendeten spektral getrennten Detektorkanäle j=1,.....i miteinander multipliziert, anschließend die Summe über alle Produkte gebildet und diese normiert und mit der Gesamtzahl n der in einer Zeitspur enthaltenen Zeitkanäle bzw. Zeitabschnitte multipliziert:

$$K_i(n) = \frac{\sum\limits_{m}\prod\limits_{j} N(m,j)}{\prod\limits_{j}\sum\limits_{m} N(m,j)} \cdot n^{(i-1)}$$

Hierbei bezeichnet N(m,j) die Anzahl Photonen im Zeitkanal m des Detektors j, i die Gesamtzahl der verwendeten Detektorkanäle bzw. Detektoreinheiten und n die Anzahl der Zeitkanäle bzw. Zeitabschnitte innerhalb der Zeitspur.

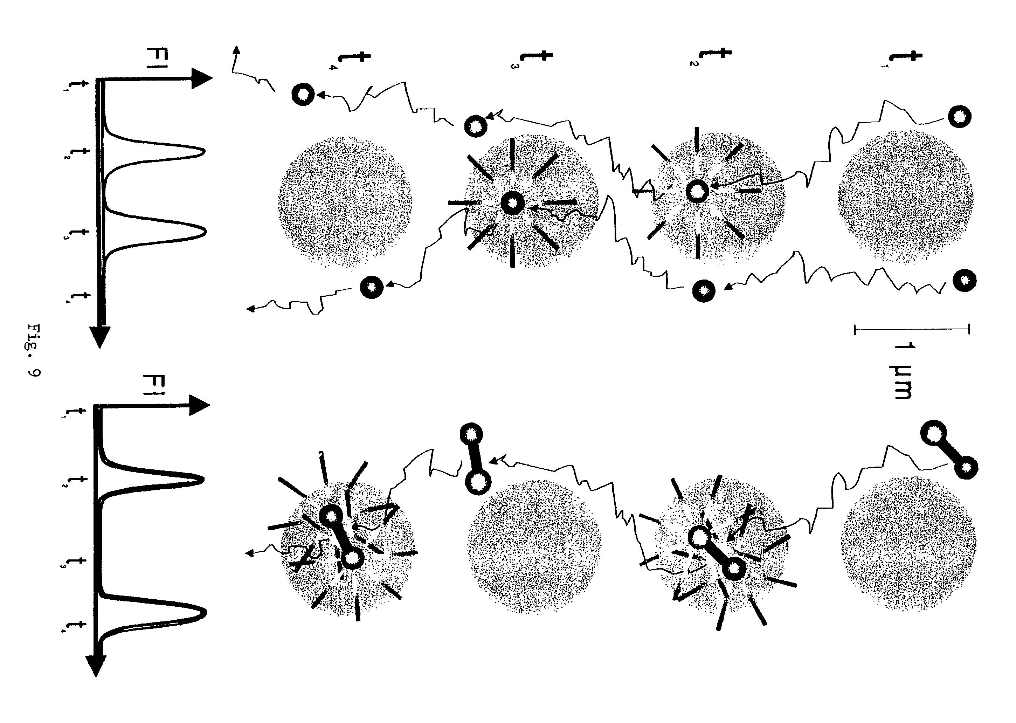

Der so erhaltene Wert K ist ein mögliches Bewertungsmaß für die untersuchte Probe. Für völlig voneinander unabhängige Signale ist K=1. Werden in den mindestens zwei Zeitspuren über das Zufallsmaß hinausgehend zeitgleich Photonen detektiert, ist K>1. Je höher K über 1 liegt, desto mehr Koinzidenzen in den beiden Zeitspuren treten auf, d. h. desto mehr Probenmoleküle mit mindestens zwei Farbstoffen werden detektiert. In Abbildung 9 ist dieses Meßprinzip am Beispiel einer Probe, die zwei unterschiedliche Fluoreszenzfarbstoffe enthält, verdeutlicht.

Mit dem erfindungsgemäßen Verfahren ist es somit nicht notwendig eine Korrelation durchzuführen, wie es z. B. eine fundamentale Voraussetzung für die Einfarben-FCS ist. Gleichzeitig erübrigt sich das für die FCS unerläßliche Anfitten der Meßkurven. Weiterhin kann so die anfallende Menge an Daten auf das Minimum von einem Wert pro Probe reduziert werden (z. B. ist $K_2$-1 direkt proportional zur Konzentration an doppelt markierten Molekülen).

Ein besonders hervorzuhebender Vorteil für die Entwicklung von homogenen Assays auf der Basis des erfindungsgemäßen Verfahrens ist die generelle Anwendbarkeit und Flexibilität der Methode. Das Targetdesign beispielsweise für konventionelle Einfarben-FCS ist limitiert durch die Notwendigkeit, positive und negative Proben über die Diffusionszeiten der fluoreszenten Moleküle zu unterscheiden. Andere Fluoreszenztechniken wie FRET oder Fluoreszenzquenching sind dadurch eingeschränkt, daß zwei Fluorophore sich in geeigneter räumlicher Nähe zueinander befinden müssen. Sie können jedoch zum Nachweis von Konformationsänderungen durchaus geeignet sein. Fluoreszenzpolarisation erfordert eine veränderte Fluorophorflexibilität, um eine Reaktion detektieren zu können. Auf dem erfindungsgemäßen Verfahren basierende Assays unterliegen nicht diesen Limitationen. Das Screening auf enzymatische Aktivität sowie auch auf Inhibitoren enzymatischer Prozesse wird entscheidend vereinfacht. Unter Anwendung der Prinzipien der evolutiven Biotechnologie in Kombination mit dem erfindungsgemäßen Verfahren und neuen Mutagenesetechniken eröffnen sich Möglichkeiten für das Design bzw. die Optimierung einer Vielzahl katalytischer Funktionen.

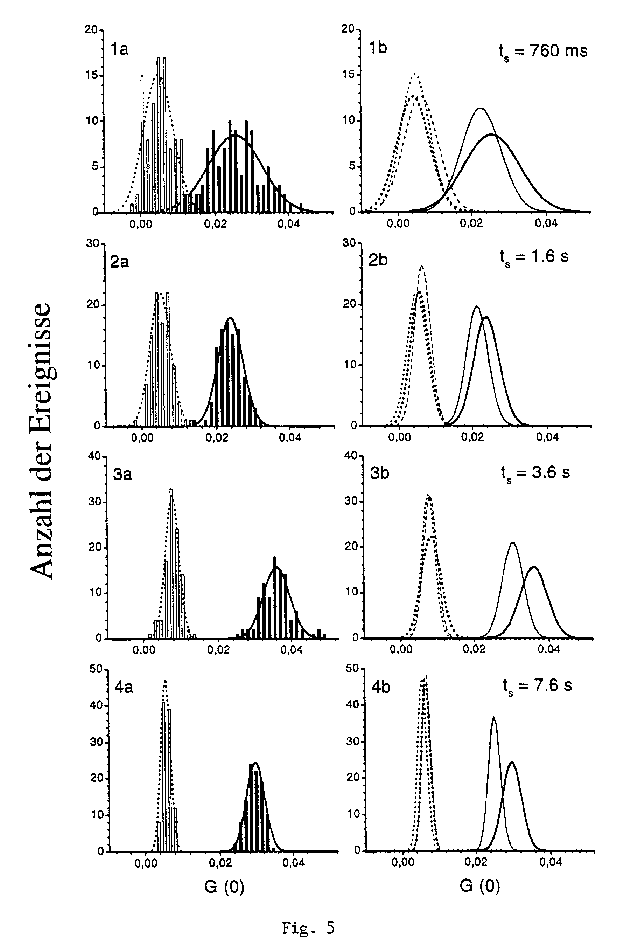

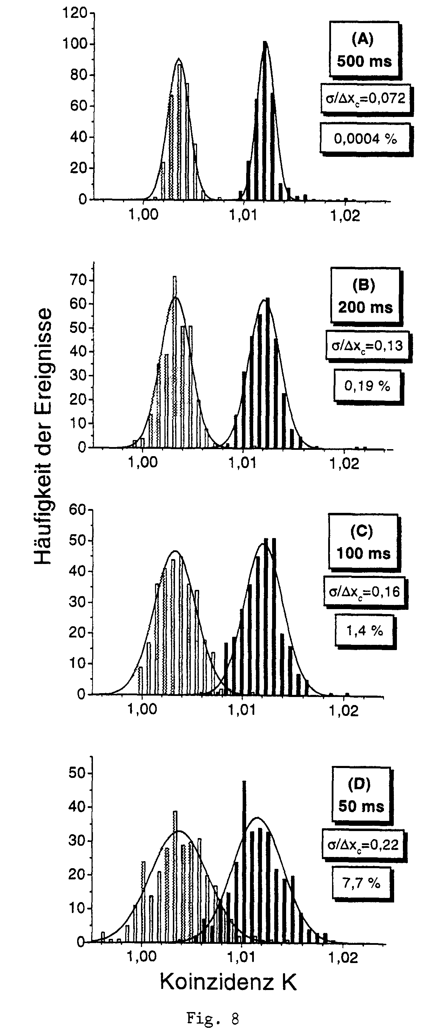

Abhängig von der gewünschten Toleranz für falsch-positive bzw. falsch-negative Resultate ist es möglich mittels des erfindungsgemäßen Verfahrens Analysezeiten von weit unter 1 s zu erzielen. Das erfindungsgemäße Verfahren ist ein Echtzeitprozeß, so daß ein *on-line* Fitting während der Messung möglich ist. Im Falle des Screenings auf Restriktionsendonukleaseaktivität sollten i.d.R. die meisten Proben negativ sein, da eine spezifische Enzymaktivität in einer beliebigen Library ein relatives seltenes Ereignis darstellt. Bei Verwendung einer Gauß'schen Funktion für positive Proben und Festsetzung einer Toleranzschwelle, welche die Anzahl nichtidentifizierter positiver Proben in einem Screeninglauf definiert, kann ein Schwellwert für die Koinzidenz für eindeutig negative Proben definiert werden. Alle Proben mit einem Koinzidenzwert unterhalb dieses Schwellwertes können unmittelbar einer weiteren Analyse mit derselben Analysezeit zugeführt werden. Es resultiert somit eine verdoppelte Analysezeit, für die wiederum ein Schwellwert definiert wird. Da die Verteilungsfunktionen bei Vielfachen dieser Analysezeit signifikant besser separiert sind, werden die meisten Proben als falsch-posititive identifiziert. Positive Proben werden nochmaligen Analysen zugeführt, bis die gewünschte Signifikanz erreicht ist. Es ist somit möglich, mit im Einzelfall zu bestimmenden Analysezeiten unter Zugrundelegen eines gewünschten Signifikanzniveaus eine adaptive Auswertung durchzuführen (siehe z. B. Figuren 5 und 8).

Das erfindungsgemäße Verfahren und seine Ausführungsformen zeichnen sich durch folgende Vorteile aus:

Bei Erzeugung eines zweifarbigen Anregungslichtes in nur einer Lichtquelle wird ein geringerer Justageaufwand erforderlich. Es ergibt sich eine Erhöhung der Stabilität bezüglich der Deckungsgleichheit der beiden konfokalen Volumenelemente. Störende Wellenlängen außerhalb der spektralen Anregungsbereiche bzw. innerhalb der Emissionsbereiche der beiden Marker-Fluorophore können durch geeignete optische Filter herausgefiltert werden. Eine Anpassung der relativen Intensitäten und Strahldurchmesser für beide Farben kann ebenfalls unter Verwendung geeigneter Filter und Lochblenden erfolgen.

Ein grundlegender Vorteil des beschriebenen Verfahrens ist die Möglichkeit der sehr schnellen Charakterisierung. Bisher erreichte Meßzeiten liegen im Bereich von wenigen Millisekunden pro Probe. Für die Ermittlung des Meßwertes K ist die fundamentale untere zeitliche Grenze die Lebensdauer der verwendeten Fluorophore, im Gegensatz etwa zur Fluoreszenz-Korrelationsanalyse, wo die Beschränkung durch die Durchtrittszeit der zu untersuchenden Biomoleküle durch das Meßvolumen (=Diffusionszeit) gegeben ist.

Ein weiterer Vorteil des erfindungsgemäßen Verfahrens der Koinzidenz-Analyse liegt in der Möglichkeit der Auswertung der Meßdaten während der Datenaufnahme (on-line) mit Hilfe einer geeigneten Meßwerterfassungs-/Prozessorkarte. Im Gegensatz z. B. zur Fluoreszenz-Korrelationsanalyse entfällt eine mathematische Modellierung.

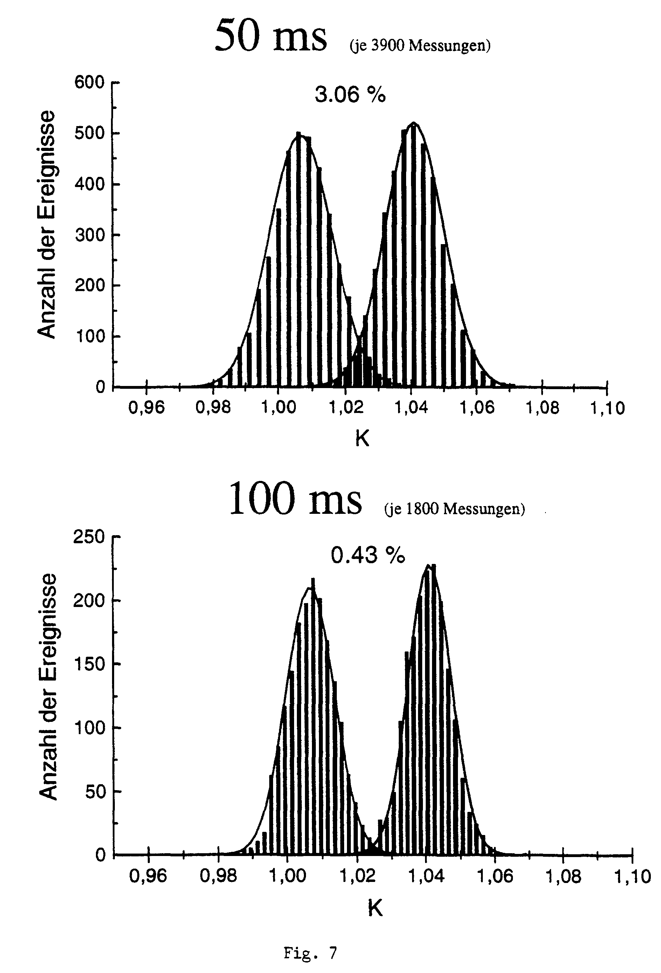

In einer weiteren bevorzugten Ausführungsform des erfindungsgemäßen Verfahrens wird die Meßzeit online angepaßt. Dieser adaptive Meßzeitalgorithmus ermöglicht eine weitere Reduzierung der Gesamtmeßzeit. Vorzugsweise bei Zeiten, die kürzer sind als die mittlere notwendige Meßzeit wird die Eindeutigkeit des Ergebnisses geprüft. Dies kann beispielsweise dadurch geschehen, daß geprüft wird, ob der zu diesem Zeitpunkt ermittelte Koinzidenzwert eindeutig einem Ereignis, d. h. z. B. einer in Figur 7 bzw. Figur 8 dargestellten Gaußverteilung für positive oder negative Proben zugeordnet werden kann. Alle Proben mit einem Koinzidenzwert unterhalb oder ggf. oberhalb eines festzulegenden Schwellenwertes können unmittelbar einer weiteren Analyse zugeführt werden. Diese Angabe eines bestimmten Signifikanzniveaus kann ebenfalls zu einer erheblichen Verkürzung der Meßzeit führen.

Es entfallen ebenfalls experimentelle Routinen zur Kalibrierung des Systems wie sie z. B. bei der Fluoreszenz-Korrelationsanalyse notwendig sind.

In einer weiteren Ausführungsform wird die für die Koinzidenzanalyse nötige Fluoreszenzfluktuation durch eine kontrollierte Bewegung der Probenmoleküle relativ zum konfokalen Volumen bewirkt. Technisch wird dies entweder durch eine Bewegung der Probe (Beaufschlagung von Schwingungen oder Induktion eines Flusses) bei stationärer Optik, oder durch Bewegung des Meßfokus in der stationären Probe (konfokales Scanning), oder durch eine Kombination von beidem erreicht. Gegenüber den in der FCS üblichen Fluktuationen aufgrund molekularer Diffusion erlaubt die kontrollierte Bewegung die gezielte Einstellung der für die Fluoreszenzdetektion optimalen Aufenthaltsdauer eines Moleküls im Fokus. Damit läßt sich die Anzahl der Fluktuationen pro Zeiteinheit gezielt erhöhen, was eine deutliche Steigerung der Signalgüte mit sich führt. Zusätzliche Effekte bestehen in der Vergrößerung des effektiven Meßvolumens, was u. a. die Sensitivität der Methode erhöht und zur Reduktion des Photobleachings führt, sowie in der Vereinheitlichung der Aufenthaltsdauer im Meßfokus für verschiedene Moleküle, was die Signalstreuung reduziert.

Demonstriert wurde die Variante einer gesteuerten Bewegung der Probe bei stationärer Optik in Form der Beaufschlagung von Schwingungen. Hierzu wurde der Probenträger an einen piezoelektrischen Positioniertisch montiert und z.B. mit Frequenzen bis zu 250 Hz oszillierend in der Raumebene senkrecht zur optischen Achse bewegt. Bereits bei Frequenzen zwischen 100 und 200 Hz ergab sich ein deutlich erhöhtes Signal-zu-Hintergrund Verhältnis mit einer damit einhergehenden Verringerung der für eine Bewertung notwendigen Meßzeit.

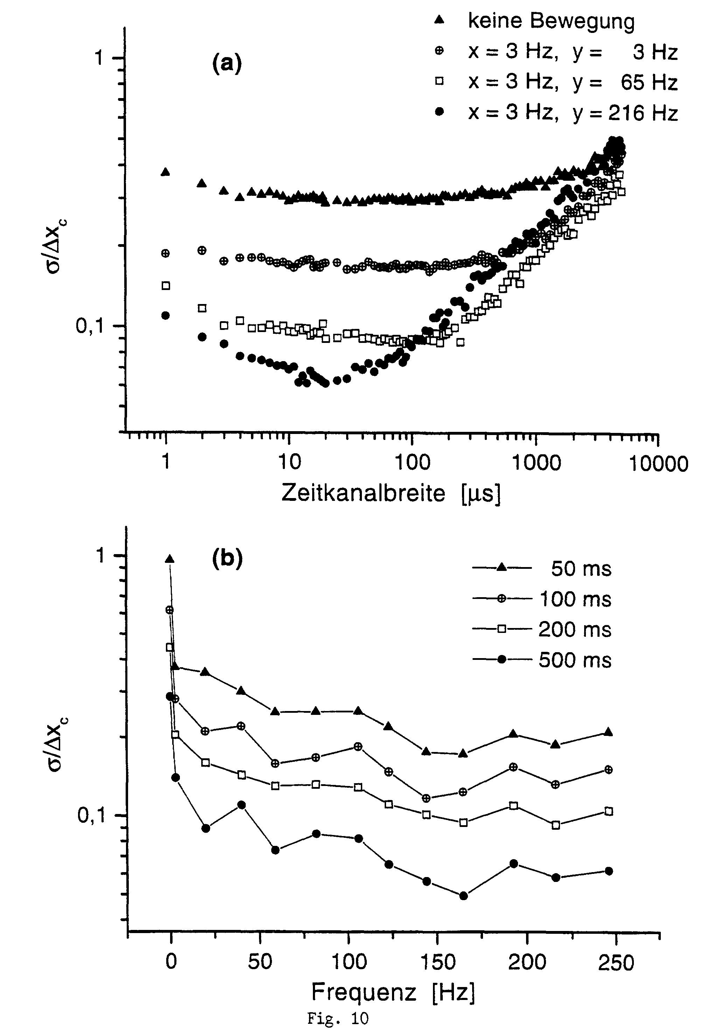

Es konnte ebenfalls gezeigt werden, daß die zeitliche Breite der Zeitkanäle und die Frequenz der periodischen Relativbewegungen die Meßwerte vorteilhaft beeinflussen können. Es zeigte sich (Figur 10), daß die Zeitkanalbreite vorzugsweise größer als die Triplettzustand-Lebensdauer der Fluorophore und/oder kleiner als die mittlere Durchtrittszeit der Moleküle durch das Meßvolumen gewählt werden sollte.

Ein weiterer, fundamentaler Vorteil des erfindungsgemäßen Verfahrens der Koinzidenz-Analyse besteht in der Möglichkeit, auch Systeme untersuchen zu können, in denen Partikel auftreten, deren Molekulargewicht sich um weniger als den Faktor 2 unterscheidet. Untersucht man solche Systeme z. B. mit der Fluoreszenz-Korrelationsanalyse, in welcher die Diffusionszeiten bestimmt werden, so führt dies zu Problemen in der Eindeutigkeit der Unterscheidung. Im erfindungsgemäßen Verfahren durch die Bestimmung der Koinzidenz zwischen Zeitspuren von spektral getrennten Detektoren ist hingegen eine eindeutige Unterscheidung möglich.

In einer weiteren Ausführungsform des erfindungsgemäßen Verfahrens kann die Koinzidenz auch durch Bestimmung der Amplitude G(0) der Kreuzkorrelationsfünktion erfolgen. Die Amplitude G(0) reicht aus, Aussagen über die Konzentration des zu untersuchenden Moleküls machen zu können und so, wie z. B. in dem Ausführungsbeispiel 1 und in Figur 5 dargestellt, die Aktivität einer Restriktionsendonuklease zu bestimmen.

Die Koinzidenzanalyse kann in einer weiteren Ausführungsform auch durch ein logisches UND bzw. Multiplikationsglied auf Hardwareebene realisiert werden.

Mit dem erfindungsgemäßen Verfahren läßt sich darüber hinaus auch die Substratkonzentration bis in den subpikomolaren Bereich verringern.

Figur 1 zeigt typische Kreuzkorrelationskurven, die von Proben mit bzw. ohne Restriktionsendonukleaseaktivität bei verschiedenen Analysezeiten erhalten wurden.

Figur 2 zeigt die Mittelwerte der jeweiligen einzelnen Kreuzkorrelationspunkte und ihre Standardabweichungen, die von Proben mit bzw. ohne Restriktionsendonukleaseaktivität erhalten wurden.

Die in Figur 3 dargestellten Histogramme zeigen die Verteilungen der evaluierten Kreuzkorrelationsamplituden G(0), die von Proben mit bzw. ohne Restriktionsendonukleaseaktivität unter Verwendung von Lochblenden unterschiedlichen Durchmessers erhalten wurden.

Figur 4 verdeutlicht den Einfluß der Substratkonzentration auf den Überlapp zwischen den Verteilungsfunktionen von Proben mit und ohne enzymatische Aktivität.

Figur 5 zeigt die Applikation des erfindungsgemäßen Verfahrens für ein simuliertes Hochdurchsatzscreening auf Restriktionsendonukleaseaktivität unter Bestimmung des Parameters G(0).

Figur 6 verdeutlicht eine bevorzugte Ausführungsform des optischen Aufbaus unter Verwendung eines Zweifarben-Fluoreszenzkreuzkorrelationsspektrometers.

Fig. 7 zeigt wie durch das erfindungsgemäße Verfahren die Meßzeiten deutlich verringert werden können.

Fig. 8 zeigt den Einfluß der Meßzeit auf den Überlapp zwischen den Verteilungsfunktionen von Proben mit und ohne enzymatische Aktivität.

Fig. 9 zeigt schematisch ein Meßprinzip.

Fig. 10 zeigt die Bedeutung der zeitlichen Breite der Zeitkanäle und der Frequenz der periodischen Relativbewegung für die Koinzidenzanalyse.

Fig. 11 verdeutlicht eine bevorzugte Ausführungsform des optischen Aufbaus mit einer Vorrichtung zur Bewegung der Probe in Form einer Beaufschlagung mit Schwingungen

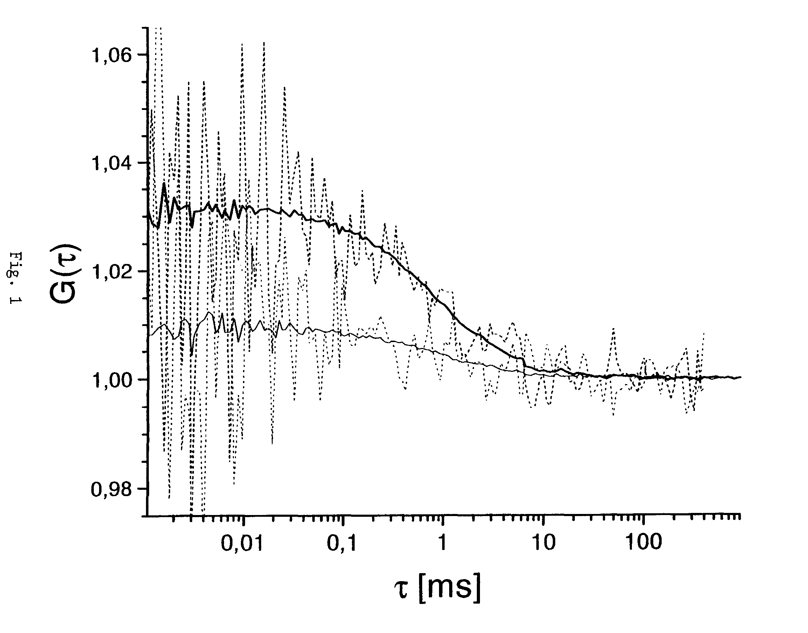

Figur 1 zeigt typische Kreuzkorrelationskurven, die von Proben mit bzw. ohne Restriktionsendonukleaseaktivität bei verschiedenen Analysezeiten erhalten wurden. Die Assays wurden unter Verwendung von 10 nM markiertem DNA-Substrat, welches für 3 Stunden bei 37 °C mit 0.25 U/µl EcoRI (untere dünne Linien) bzw. ohne Zusatz von Enzym (obere Linien in Fettdruck) inkubiert wurde, durchgerührt. Die Korrelationszeiten betrugen 760 ms (gepunktete Linien) und 120 s (durchgezogene Linien). Die verwendete Lochblende wies einen Durchmesser von 30 µm auf. Die Anregungsintensitäten betrugen 19 kW/cm$^2$ (488 nm) bzw. 15 kW/cm$^2$ (633 nm). Die bei kurzen Analysezeiten erhaltene Kreuzkorrelationskurve ist verrauschter als die bei langen Analysezeiten erhaltene Kreuzkorrelationskurve. Dennoch stimmen die charakteristischen Diffusionszeiten und Partikelzahlen hinreichend überein, um die Aussage zu erlauben, daß die erhaltenen Kurven dieselbe Information enthalten.

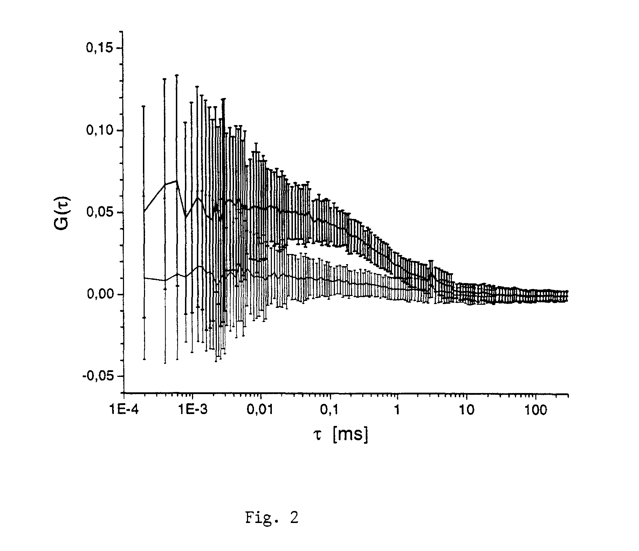

Figur 2 zeigt die Mittelwerte der jeweiligen einzelnen Kreuzkorrelationswerte $\tau$ und ihre Standardabweichungen, die von Proben mit bzw. ohne Restriktionsendonukleaseaktivität erhalten wurden. Die Assays wurden unter Verwendung von 1 nM markiertem DNA-Substrat, welches für 3 Stunden bei 37 °C mit 0.25 U/µl EcoRI (untere dünne Linie) bzw. mit 0.25 U/µl HindIII (obere Linie in Fettdruck) inkubiert wurde, durchgeführt. Die Korrelationszeiten betrugen 1.6 s. Die verwendete Lochblende wies einen Durchmesser von 30 µm auf. Die Anregungsintensitäten betrugen 38 kW/cm$^2$ (488 nm) bzw. 3.1 kW/cm$^2$ (633 nm). Es zeigt sich, daß die Standardabweichungen bei $\tau$-Werten unterhalb von 0.01 ms drastisch erhöht sind.

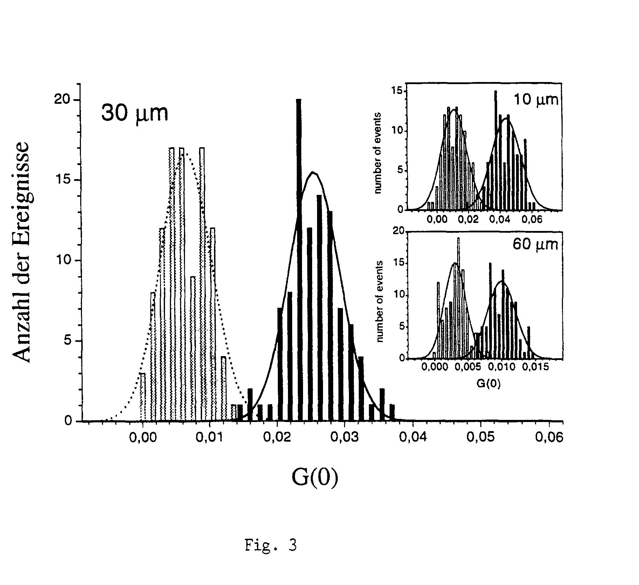

Die in Figur 3 dargestellten Histogramme zeigen die Verteilungen der evaluierten Kreuzkorrelationsamplituden G(0), die von Proben mit bzw. ohne Restriktionsendonukleaseaktivität unter Verwendung von Lochblenden unterschiedlichen Durchmessers erhalten wurden. Die Balken bezeichnen die Anzahl der G(0)-Werte, die in einer Binweite von 0.0015 (30 µm), 0.0026 (10 µm) bzw. 0.00062 (60 µm) liegen. Der Hauptteil der Abbildung zeigt die Verteilungsfunktionen von Proben mit (gepunktete Balken) bzw. ohne (durchgezogene Balken) enzymatische Aktivität bei optimalem Lochblendendurchmesser (30 µm); der Überlapp zwischen den Gaußkurven beträgt hier 0.6 %. Er beträgt 2.4% bei einem Lochblendendurchmesser von 10 µm bzw. 3.4 % bei einem Lochblendendurchmesser von 60 µm. Die Assays wurden unter Verwendung von 10nM gelabeltem DNA-Substrat durchgerührt, welches für 3 Stunden bei 37 °C mit 0.25 U/µl EcoRI (gepunktete Balken) bzw. mit 0.25 U/µl HindIII (durchgezogene Balken) inkubiert wurde. Die Korrelationszeiten betrugen 1.6 s. Die Anregungsintensitäten betrugen 38 kW/cm$^2$ (488 nm) bzw. 31 kW/cm$^2$ (633 nm). Der ermittelte optimale Lochblendendurchmesser reflektiert offenbar den Kompromiß zwischen der Zunahme der Detektionseffizienz mit zunehmendem Lochblendendurchmesser (bedingt durch eine erhöhte Aufenthaltsdauer der Fluorophore im Fokus) und der Abnahme des Signal-Rausch-Verhältnisses mit zunehmendem Lochblendendurchmesser (bedingt durch einen erhöhten Fluoreszenzuntergrund).

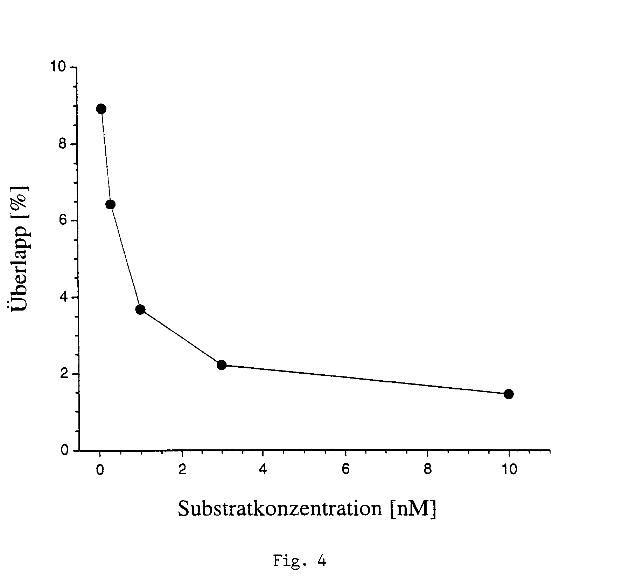

Figur 4 verdeutlicht den Einfluß der Substratkonzentration auf den Überlapp zwischen den Verteilungsfunktionen von Proben mit und ohne enzymatische Aktivität. Die Assays wurden wie in der Legende zu Figur 3 beschrieben unter Verwendung eines Lochblendendurchmessers von 30 µm durchgeführt. Die Separation der Verteilungsfunktionen erhöhte sich mit zunehmender Konzentration.

Figur 5 zeigt die Applikation des erfindungsgemäßen Verfahrens für ein simuliertes Hochdurchsatzscreening auf Restriktionsendonukleaseaktivität. Die Proben wurden zyklisch gescreent (insgesamt 500 Messungen). Der linke Teil der Figur 5 zeigt die Verteilungsfunktionen von Proben mit (BamHI, offene Balken) und ohne (HindIII, schwarze Balken) spezifische Endonukleaseaktivität bei Analysedauern von 760 ms (1a), 1.6 s (2a), 3.6 s (3a) und 7.6 s (4a). Die Verteilungsfunktionen der Kreuzkorrelationsamplituden G(0) wurden wie in der Legende zu Figur 3 beschrieben evaluiert. Die Binweite betrug 0.0015. Der rechte Teil der Figur 5 verdeutlicht die Separationseffizienz des erfindungsgemäßen Verfahrens mittels Gauß-Fitting bei reinem Substrat (durchgezogene Linie), HindIII (durchgezogene Linie in Fettdruck), BamHI (gepunktete Linie in Fettdruck), Eco-RI (gepunktete Linie) und SspI (gestrichelte Linie). Der Überlapp betrug 2.6 - 5.4 % (760 ms), 0.1 % (1.6 s), < 0.002 % (3.6 s) bzw. << $10^{-5}$% (7.6 s). Die Assays wurden in einem Volumen von 5 µl unter Verwendung von 10 nM gelabeltem DNA-Substrat durchgeführt, welches für 3 Stunden bei 37 °C mit 0.25 U/µl HindIII, 0.1 U/µl BamHI, 0.25 U/µl EcoRI, 0.08 U/µl SspI bzw. ohne Zugabe von Enzym inkubiert wurde. Die Anregungsintensitäten betrugen 19 kW/cm$^2$ (488 nm) und 15 kW/cm$^2$ (633 nm). Der Lochblendendurchmesser betrug 30 µm. Es zeigt sich, daß mit zunehmender Analysezeit die Verteilungsfunktionen schmaler wurden und somit die Mittelwerte klar zu separieren sind.

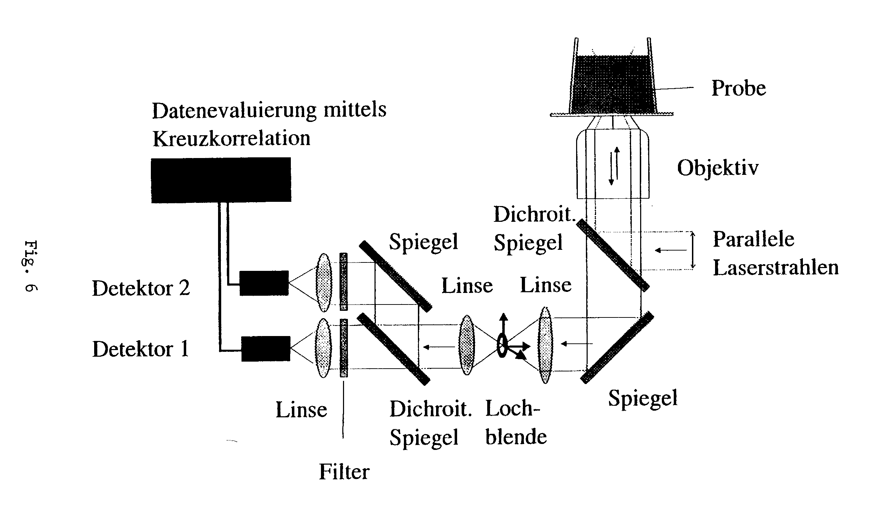

Figur 6 zeigt den optischen Aufbau eines Zweifarben-Fluoreszenzkreuzkorrelationsspektrometers. Zwei parallele Laserstrahlen eines Argon-Ionen-Lasers (488 nm) und eines Helium-Neon-Lasers (633 nm) passieren ein Wasserimmersionsobjektiv (40x, N.A. = 1.2) in einem Epi-Illuminationsaufbau, so daß die zwei übereinandergelagerten Foci in der Probe ein konfokales Meßvolumenelement in der Größenordnung von Femtolitern bilden. Das emittierte Fluoreszenzlicht wird durch das Mikroskopobjektiv gesammelt, mittels dichroitischem Spiegel vom Anregungs-strahlengang separiert und mittels einer Linse auf eine Lochblende fokussiert. Die Lochblende variablen Durchmessers ist in der Bildebene der Linse angeordnet und kann in x-, y- und z-Richtung justiert werden. Die Fluoreszenzemission wird parallelisiert, durch einen dichroitischen Spiegel in eine grüne und rote Fraktion separiert und auf zwei Avalanche-Photodioden refokussiert.

In Figur 7 wurde eine Variante des erfindungsgemäßen Verfahrens eingeführt, welche zu einer gesteuerten Bewegung der Probe bei stationärer Optik in Form einer Beaufschlagung von Schwingungen verwendet wurde. Hierzu wurde der Probenträger an einen piezoelektrischen Positioniertisch montiert und entsprechend oszilliert. Es wurden Proben eingesetzt, die 10 nM doppelsträngiges DNA-Substrat enthielten und denen ferner in einer Ausführungsform Restriktionsendonuklease EcoRI zugesetzt wurde oder in einer anderen Ausführungsform kein solches Enzym zugesetzt wurde. Der obere Teil der Abbildung zeigt, daß bei einer Analysenzeit von 50 ms (je 3900 Messungen, Frequenzen 75 Hz(x) und 49 Hz(y)) ein Überlapp zwischen Signalen der beiden verschiedenen Probentypen von ca. 3 % erzielt werden konnte. Im unteren Teil der Abbildung zeigt sich, daß bei einer Analysenzeit von 100 ms (je 1800 Messungen, Frequenzen 75 Hz(x) und 49 Hz(y)) ein Überlapp von sogar nur 0.4% erzielt werden konnte. Somit ist deutlich gezeigt, daß unter Anwendung einer erzwungenen Bewegung der fluoreszierenden Partikel eine Verkürzung der Meßzeit und eine erhöhte Datengenauigkeit erreicht werden kann.

In Figur 8 sind Histogramme aus jeweils 300 Messungen des Koinzidenzwertes für Proben aus reinem Substrat (10 nM zweifach markierte Doppelstrang-DNA, schwarze Balken) und bereits durch Restriktionsendonuklease geschnittene Probe (10 nM zweifach markierte Doppelstrang-DNA, gepunktete Balken) bei einer Oszillationsfrequenz von 216 Hz dargestellt. Die Abbildungen A-D zeigen verschiedene Analysenzeiten. Die Verteilungen wurden durch eine Gaußfunktion angefittet. Zur Bestimmung des Meßfehlers wurden die Standardabweichungen und der Überlapp der Fitfunktionen bestimmt.

Figur 9 illustriert schematisch ein Meßprinzip. In der linken Spalte diffundieren unterschiedliche Farbstoffe unabhängig durch die Probenlösung. Das jeweilige Auftreten eines Farbstoffes im Meßvolumen ist daher unabhängig von dem Verhalten des anderen Farbstoffs, und die Photonenereignisse in einer Zeitspur sind statistischer Natur und vollkommen unabhängig von den Photonenereignissen, die in der anderen Zeitspur aufgenommen werden. Der Koinzidenzwert in solch einem Falle ist genau K=1. In der rechten Spalte sind beide Farbstoffe aneinander gebunden und diffundieren nun gemeinsam durch die Probenlösung. Tritt der Komplex im Meßvolumen auf, so werden in den beiden Meßspuren zeitgleich (d.h. im selben Zeitkanal m) Photonenereignisse registriert. Diese Abhängigkeit der Signale aus den unabhängigen, spektral getrennten Detektoren führt zu einer Häufung von Koinzidenzen (d.h. zeitgleich registrierten Photonen), welche über das statistische Maß voneinander unabhängiger Signale hinausgeht. Der Koinzidenzwert in solch einem Falle beträgt K>1. Je höher der Anteil von miteinander verbundenen verschiedenen Farbstoffen ist, desto mehr unterscheidet sich K von 1.

In Figur 10 ist die Detektionssicherheit in Abhängigkeit von der zeitlichen Breite der Zeitkanäle (a) und der periodischen Relativbewegung (b), welcher Proben- und Meßvolumen unterworfen werden, dargestellt. Um geeignete Wertebereiche dieser Parameter zu bestimmen, wurde eine Testprobe verwendet (10 nM, mit den Farbstoffen Rhodamine Green und Cy-5 zweifach markierte dsDNA) und für verschiedene Wertekombinationen je 300 unabhängige Messungen mit einer Meßzeit von je 500 ms durchgeführt. Als Maß für die Detektionssicherheit eine Probe mit zweifach markierten Molekülen richtig zu charakterisieren, wurde die relative Standardabweichung $\sigma/\Delta x_c$ aus der angepaßten Gaußverteilung abgeleitet. Sie gibt das Verhältnis aus der Standardabweichung $\sigma$ und dem Abstand $\triangle x_c$ zwischen dem Verteilungszentrum ($x_c$) und dem Zentrum, welches eine Verteilung besitzen würde, die eine Meßprobe ohne jegliche zweifach markierte Moleküle beschreibt ($x_{c,0}=1$) an. Kleines $\sigma/\Delta x_c$ bedeutet hierbei einen kleinen Überlapp zwischen einer "positiven" Verteilung und einer "negativen" Verteilung und somit eine erhöhte Detektionssicherheit. In Abbildung 10 (a) ist $\sigma/\Delta x_c$ für unterschiedliche zeitliche Breiten der Zeitkanäle aufgetragen. Ein Plateau minimaler relativer Standardabweichung bildet sich bei mittleren Werten der Zeitkanalbreite. Bei Zeitkanalbreiten, die im Bereich der Triplettzustands-Lebensdauer der Farbstoffmoleküle liegen (< 5 µs), steigt $\sigma/\Delta x_c$ an. Ebenso steigt $\sigma/\Delta x_c$ an, wenn die Zeitkanalbreite in den Bereich der mittleren Durchtrittszeit der Moleküle durch das Meßvolumen kommt. Allerdings kann bei Erhöhung der Frequenz der Relativbewegung diese obere Grenze an Zeitkanalbreiten herabgesetzt werden. Abb. 10b zeigt die Abhängigkeit der relativen Standardabweichung $\sigma/\Delta x_c$ von der Frequenz der Relativbewegung zwischen Probenvolumen und Meßvolumen. (Es ist immer die y-Frequenz angegeben. Ist diese nicht Null, geht sie immer mit einer Frequenz von 3 Hz in x-Richtung einher) Es sind Kurven für verschiedene Meßzeiten aufgetragen, die Kanalbreite betrug 12.5 µs. Bei einer nur geringen Frequenz der Relativbewegung ist schon ein sehr starker Abfall der relativen Standardabweichung zu sehen. Der Kurvenverlauf zeigt eine moderate Verkleinerung von $\sigma/\Delta x_c$ bei zunehmender Frequenz. Im Bereich von 3-246 Hz wird $\sigma/\Delta x_c$ nochmals um etwa einen Faktor 2 verringert, wobei bei der Anlegung von noch höheren Frequenzen noch weitere Verbesserungen zu erwarten sind. Die relativen Standardabweichungen nehmen mit zunehmender Meßzeit ab.

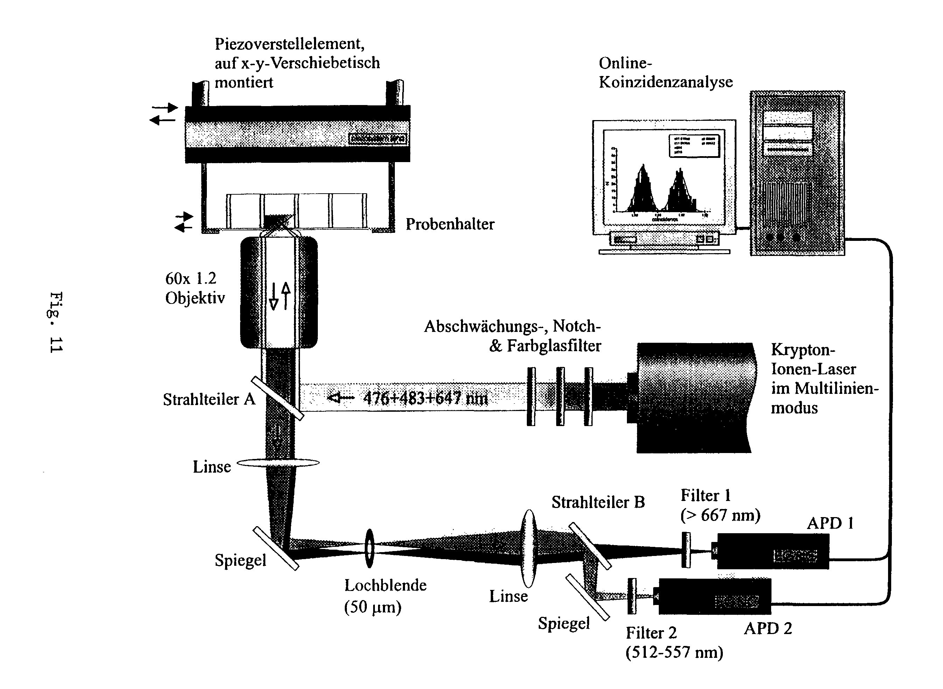

Figur 11 zeigt den optischen Aufbau eines Zweifarben-Fluoreszenzkreuzkorrelationsspektrometers mit einer Vorrichtung zur Bewegung der Probe in Form einer Beaufschlagung mit Schwingungen. Parallele Laserstrahlen eines Krypton-Ionen-Lasers mit den Wellenlängen 476/483nm und 647nm passieren ein Wasserimmersionsobjektiv (60x, N.A. = 1.2) in einem Epi-Illuminationsaufbau. Der Probenhalter ist mit einem zweidimensional beweglichen Piezostellelement verbunden, welches wiederum auf einem mechanischen Hochpräzisions-x-y-Verschiebetisch montiert ist. Das emittierte Fluoreszenzlicht wird durch das Mikroskopobjektiv gesammelt, mittels dichroitischem Spiegel vom Anregungsstrahlengang separiert und mittels einer Linse auf eine Lochblende fokussiert. Die Lochblende variablen Durchmessers ist in der Bildebene der Linse angeordnet und kann in x-, y- und z-Richtung justiert werden. Die Fluoreszenzemission wird parallelisiert, durch einen dichroitischen Spiegel in eine grüne und rote Fraktion separiert und auf zwei Avalanche-Photodioden refokussiert.

**Ausführungsbeispiel 1**

Verwendete Materialien:

Typ II Restriktionsendonukleasen (E.C. 3.1.21.4) EcoRI (25 U/µl), BamHI (10 U/µl), SspI (8 U/µl) und HindIII (25 U/µl) wurden von der Fa. Stratagene (La Jolla, CA) erworben; die Enzymaktivitäten sind in Klammern angegeben. Fluoreszenzmarkierte 66 nt Oligonukleotide Cy5-ATGGCTAATGACCGAGAATAGG-GATCCGAATTC AATATTGGTACCTACGGGCTT-TGCGCTCGTATC und RhG-GATACGAGCGCAAAGCCCGTAGGTACCAATATT-GAATTCGGATCCCTAT TCTCGGTCATTAGCCAT wurden durch die Fa. MWG-Biotech (Ebersberg, Deutschland) synthetisiert und HPLC-gereinigt; das erste Oligonukleotid weist am 5'-Terminus als Fluoreszenzmarker Cy5 (Amersham, UK) auf, während das zweite Oligonukleotid mit Rhodamine Green RhG (Molecular Probes) gelabelt ist. Bei Hybridisierung der beiden komplementären Stränge ergeben sich Erkennungsstellen für BamHI (einfach unterstrichen), EcoRI (doppelt unterstrichen) und SspI (gepunktet). Die Hybridisierung der komplementären Stränge erfolgte bei Konzentrationen von 1 µM in 100 mM KOAc, 25 mM Tris-Acetat, pH 7.6, 10 mM MgOAc, 0.5 mM β-Mercaptoethanol, 10 µg/ml BSA unter Erhitzen der Lösung auf 94 °C und anschließendes Abkühlen auf 23 °C mit einem Temperaturgradienten von 1.2 °C/min. Als Resultat entstand ein zweifach-markierter DNA-Doppelstrang mit Erkennungsstellen für BamHI, EcoRI und SspI.

Homogener Restriktionsendonuklease-Assay:

Endonuklease-Assays wurden für 3 Stunden bei 37 °C durchgeführt. Der Reaktionspuffer enthielt 150 mM KOAc, 37.5 mM Tris-Acetat, pH 7.6, 15 mM MgOAc, 0.75 mM β-Mercaptoethanol, 515 µg/ml BSA, 0.05 % Triton X-100, 0.5 % Glycerol, 1 - 20 nM gelabeltes DNA-Substrat und überschüssige Anteile (0.08 - 0.25 U/ µl) an Restriktionsenzymen BamHI, EcoRI, SspI und HindIII.

Optischer Aufbau:

Die Messungen erfolgten unter Verwendung eines Zweifarben-Fluoreszenzkreuzkorrelationsspektrometers (Dual-color ConfoCor, C. Zeiss, Oberkochen, Deutschland). Das konfokale Meßvolumen von 0.44 fl wurde durch Überlagerung der Foci eines Argon-Ionen-Lasers (488 nm) und eines Helium-Neon-Lasers (633 nm) gebildet. Die Fluoreszenzemissionssignale wurden separat unter Verwendung von zwei Avalanche-Photodioden detektiert; im Emissionsstrahlengang befand sich eine konfokal angeordnete Lochblende. Das Spektrometer war mit einem Thermostaten ausgestattet. Der Fokus wurde 100 µm über dem Boden des jeweiligen Probengefäßes positioniert. Die Meßtemperatur betrug 22 °C. Die Proben wurden in Probenträgern im Mikrotiterplattenformat vorgelegt. Hierbei handelte es sich entweder um kontaminationsfrei verschlossene Plastikfolien (Max-Planck-Institut für Biophysikalische Chemie) oder um kommerzielle Deckglaskammern (Nunc, Dänemark).

Kreuzkorrelationsanalyse:

Der theoretische Hintergrund der Kreuzkorrelationsanalyse wurde detailliert von Schwille et al. (Biophys. J. 72, 1878 - 1886, 1997) beschrieben. Auf den Offenbarungsgehalt dieser Publikation wird Bezug genommen. Die Daten der Kreuzkorrelation wurden unter Verwendung eines dreidimensionalen Modells für einzelne diffundierende Partikel evaluiert (Rigler und Widengren, Bioscience 3, 180 - 183, 1990):
G(0) bezeichnet die Korrelationsamplitude bei $\tau = 0$, welche proportional zur Konzentration zweifach-gelabelter Moleküle im zylindrischen Meßvolumen des Radius $r_0$ und der halben Länge $z_0$ ist. Der Parameter $\tau_{Diff}$ steht gemäß der Gleichung $\tau_{Diff} = r_0^2/4D$ in einem umgekehrt proportionalen Zusammenhang zum Diffusionskoeffizienten D. Die experimentellen Daten wurden unter Anwendung des Access 2.0 Programms der Fa. EVOTEC BioSystems GmbH mittels nicht-linearem Leastsquare Marquardt-Fit prozessiert. G(0) war der einzige freie Parameter bei der Evaluierung der Kreuzkorrelationsmessungen. Der Struktur-parameter $z_0/r_0$ wurde mittels Autokorrelationsmessungen an freier Farbstofflösung ermittelt; die durchschnittliche Diffusionszeit $\tau_{Diff}$ des Substrates wurde mittels einer 60 s Messung ohne Zusatz von Enzym bestimmt. Beide Parameter wurden im Fitting der Kreuzkorrelationsdaten vorgegeben.

Statistische Evaluierung:

Ein typisches Set Kreuzkorrelationsmessungen enthielt 100 Kurven, welche unter Verwendung von Akkumulationszeiten zwischen 760 ms und wenigen Sekunden aufgenommen wurden. Aus jedem Set wurde die Amplitude G(0), welche mittels Fitting erhalten wurde, in einem Histogramm aufgetragen (Details siehe Figur 3). Die Analyse ergab, daß die G(0)-Verteilungsfunktionen mittels Gauß-Funktion approximiert werden können. Die Mittelwerte der Gauß-Funktionen korrespondieren mit den durchschnittlichen Konzentrationen der Fluorophore, während die Standabweichungen die Streuung der einzelnen Messungen widerspiegeln. Um ein Maß für die Unterscheidbarkeit der Verteilungsfunktionen zu erhalten, wurde die Überlappungsfläche der gefitteten Gauß-Funktionen durch Integration der Gauß-Funktionen ermittelt. Die Überlappungsflächen wurden standardisiert, so daß ein 100 % Überlapp Gauß-Funktionen mit identischem Mittelwert und identischer Standardabweichung entspricht.

**Ausführungsbeispiel 2**

Verwendete Materialien:

Die verwendeten Materialien und Versuchsbedingungen entsprachen im wesentliche in dem Ausführungsbeispiel 1 angegebenen. Allerdings wurde hier als Restriktionsendonuklease nur EcoRI verwendet.

Homogener Restriktionsendonuklease-Assay:

Die Endonuklease-Assays wurden für EcoRI gemäß Ausführungsbeispiel 1 durchgeführt. Als Referenz wurde eine Probe, der keine Restriktionsendonuklease zugesetzt wurde, verwendet.

Optischer Aufbau

Der Experimentelle Aufbau ist in Abbildung 11 dargestellt. Fluoreszenzanregung erfolgte durch Epi-illumination eines Wasserimmersionsobjektives (UPLAPO 60x/1.2W;Olympus, Japan) mit den Wellenlängen 476/483 nm und 647 nm eines Krypton-Ionen-Lasers (INNOVA 90-K; Coherent, Palo Alto, USA), der im Multiliniemodus betrieben wurde. Der dichroitische Strahlteiler A (AHF) Analysentechnik, Tübingen) reflektiert bei <502 nm und 585-655 nm und transmittiert bei 502-585 und >655nm. Zusätzliche Laserlinien ber 531 nm und 568 nm werden mit einem speziell angefertigten Anregungs-/Notch-Filter (>OD 5; AHF Analysentechnik) entfernt. Angepaßte relative Laseranregungsenergien für beide Wellenlängen erhält man durch die Kombination eines Farbglas-Absorptionsfilters (BG 40, Andover Corporation, Salem, USA) und eines Abschwächungsfilters (OD 0.6; Spindler &Hoyer, Göttingen). Die Proben wurden in kommerziellen Deckglaskammern vorgelegt (Nunc, Dänemark). Der Probenhalter ist mit einem zweidimensional beweglichen Piezostellelement (Piezosystem Jena) verbunden, welches wiederum auf einem mechanischen Hochpräzisions-x-y-Verschiebetisch (Märzhäuser, Wetzlar) montiert ist. Die Fluoreszenzphotonen werden am dichroitischen Strahlteiler B spektral separiert (585DCLP02;Omega Optical, Brattleboro, USA) und nach optischer Filterung im roten (667EFLP; Omega) und grünen Kanal (535RDF45;Omega), auf zwei Avalanche-Photodioden (APD) abgebildet (SPCM-AQ 131-FS; EG&G Optoelectronics, Kanada). Die digitalen Pulse der APDs werden entweder von einer Dual input Multiscaler PC-Karte (MCD-, FAST Com-Tec, München) für die Analyse von Zeitspuren mit hoher zeitlicher Auflösung oder von einer on-board- Prozessor PC-Karte (Adwin-)LD; Jäger Meßtechnik, Lorsch), welche für eine Online-Datenverarbeitung programmiert werden kann, aufgenommen.

Koinzidenzanalyse:

Zur Ermittlung der Koinzidenz wurden die Photonenzählsignale der beiden Detektoren von einer Meßkarte simultan aufgenommen und simultan mit einer wählbaren Zeitkanalbreite gerastert. Von den so erhaltenen zwei Zeitspuren wurden nun jeweils zeitgleiche Kanäle miteinander multipliziert, dann die Summe über alle Produkte gebildet, und für eine Normierung durch beide Zeitspur-(Einzel)summen geteilt und mit der Zeitkanal-Gesamtzahl multipliziert:

$$K(n) = \frac{\sum_m N_1(m) N_2(m)}{\sum_m N_1(m) \sum_m N_2(m)} \cdot n$$

wobei m den Index des jeweiligen Zeitkanals (nach aufsteigender Zeit geordnet), n die Gesamtzahl der in einer Zeitspur enthaltenen Zeitkanäle, $N_1(m)$ die Anzahl der Photonenzählereignisse in Zeitspur 1 in Zeitkanal m und $N_2(m)$ die Anzahl der Photonenzählereignisse in Zeitspur 2 in Zeitkanal m angibt.

### Auswertung

Der erhaltene Wert K ist das Bewertungsmaß für die betrachtete Probe. Es wird lediglich die *Anzahl* der koinzidenten Ereignisse bewertet. Für total voneinander unabhängige Signale ist K wegen der Normierung 1. Treten Photonensignale in beiden Zeitspuren über das Zufallsmaß hinausgehend gehäuft zeitgleich auf, ist K > 1. Je höher K über 1 liegt, desto mehr Koinzidenzen, d.h. zeitgleich registrierte Photonen, in den beiden Zeitspuren treten auf. Letzteres ist ein Maß für denjenigen Anteil der Moleküle, an welche beide Farbstoffspezies gebunden sind.

### Statistische Auswertung

Es wurde ebenfalls eine Statistik über die Koinzidenzwerte aufgestellt. Die in je 300 Messungen von Proben aus reinem Substrat und je 300 Messungen von bereits durch Restriktionsendonuklease geschnittenen Proben bei einer Oszillationsfrequenz von 216 Hz und unterschiedlichen Analysezeiten ermittelten Koinzidenzwerte wurden in einem Histrogramm aufgetragen (siehe Figur 8). Die Analyse ergab, daß die Koinzidenzwerte durch eine Gauß-Funktion approximiert werden können. Die Mittelwerte der Gaußfunktion verringert um 1 korrespondieren mit den durchschnittlichen Konzentrationen an zweifach gelabeltem Substrat, während die Standardabweichungen die Streuung der einzelnen Messungen widerspiegeln. Um ein Maß für die Unterscheidbarkeit der Verteilungsfunktionen zu erhalten, wurde die Überlappungsfläche der gefitteten Gauß-Funktionen durch Integration der Gauß-Funktionen ermittelt. Die Überlappungsflächen wurden standardisiert, so daß ein 100 % Überlapp Gauß-Funktionen mit identischem Mittelwert und identischer Standardabweichung entspricht.

### Patentansprüche

1. Verfahren zum Nachweis von Assoziations,- Dissoziations,- Verknüpfungs- oder Spaltreaktionen sowie Konformationsänderungen von Analyten in einer Probe mittels Koinzidenzanalyse, wobei

   - die Probe mindestens zwei mit unterschiedlichen Fluoreszenzfarbstoffen markierte Analyte und/oder mindestens einen mit mindestens zwei unterschiedlichen Fluoreszenzfarbstoffen markierten Analyten enthält,
   - die Probe zur Anregung der Fluoreszenzemission der mindestens zwei Farbstoffe von mindestens einem Laser beleuchtet wird,
   - die von der Probe ausgehenden, aus mindestens einem Meßvolumenelement V stammenden Fluoreszenzsignale mittels mindestens zweier Detektionseinheiten detektiert werden,
   - die jeweils in den Detektionseinheiten detektierten Signale oder hiervon abgeleitete Zeitspuren in beliebige, im wesentlichen jedoch simultane, Zeitabschnitte mit frei wählbaren Zeitkanalbreiten zerlegt werden,
   - die Anzahl der in mindestens einem Zeitabschnitt enthaltenen Signale und/oder die Zeitintervalle zwischen Signalen in den Zeitabschnitten ermittelt werden,
   - für mindestens einen Zeitabschnitt der ersten Detektionseinheit eine Koinzidenz-analyse der ermittelten Daten mit mindestens einem im wesentlichen zeitgleichen Zeitabschnitt der zweiten Detektionseinheit durchgeführt wird
   - mindestens eine Statistik der Resultate der Koinzidenzanalyse erstellt wird, und/oder die Resultate einer Schwellwertanalyse unterzogen werden,
   - diese oder mindestens eine Kombination mehrerer Statistiken nach dem Vorhandensein von Merkmalen, welche für eine Assoziations,- Dissoziations,- Verknüpfungs- oder Spaltreaktion oder Konformationsänderungen charakteristisch sind, bewertet wird.

2. Verfahren nach Anspruch 1, **dadurch gekennzeichnet, daß** die Zeitkanalbreiten größer als die längste Fluoreszenzlebensdauer der mindestens zwei Farbstoffe sind.

3. Verfahren nach mindestens einem der Ansprüche 1 und/oder 2, **dadurch gekennzeichnet, daß** die Zeitkanalbreiten kleiner als die Durchtrittszeit des mindestens einen Probenmoleküls durch das Meßvolumen sind.

**4.** Verfahren nach mindestens einem der Ansprüche 1 bis 3, **dadurch gekennzeichnet, daß** die Detektionseinheiten unterschiedliche spektrale Detektionsempfindlichkeiten aufweisen.

**5.** Verfahren nach mindestens einem der Ansprüche 1 bis 4, **dadurch gekennzeichnet, daß** das Meßvolumenelement $V \leq 10^{-12}$ l ist.

**6.** Verfahren gemäß mindestens einem der Ansprüche 1 bis 5, **dadurch gekennzeichnet, daß** die Probe von mindestens einem Laser beleuchtet wird, der elektromagnetische Strahlung mindestens einer Wellenlänge emittiert, die geeignet ist, die mindestens zwei Farbstoffe anzuregen.

**7.** Verfahren nach mindestens einem der Ansprüche 1 bis 6, **dadurch gekennzeichnet, daß** die Koinzidenzanalyse online durchgeführt wird.

**8.** Verfahren nach mindestens einem der Ansprüche 1 bis 7, **dadurch gekennzeichnet, daß** die Zeit zur Durchführung der jeweiligen Messung während der Messung individuell angepaßt wird.

**9.** Verfahren nach mindestens einem der Ansprüche 1 bis 8, **dadurch gekennzeichnet, daß** im Rahmen der Koinzidenzanalyse die Koinzidenz durch die Amplitude G(0) der Kreuzkorrelation ermittelt wird.

**10.** Verfahren nach mindestens einem der Ansprüche 1 bis 9, **dadurch gekennzeichnet, daß** im Rahmen der Koinzidenzanalyse die Koinzidenz durch logische UND-Verknüpfung ermittelt wird.

**11.** Verfahren nach mindestens einem der Ansprüche 1 bis 10, **dadurch gekennzeichnet, daß** die Koinzidenz durch Multiplikation gemäß nachfolgender Formel ermittelt wird:

$$K_i(n) = \frac{\sum_m \prod_j N(m,j)}{\prod_j \sum_m N(m,j)} \cdot n^{(i-1)}$$

wobei N(m,j) die Anzahl Photonen im Zeitabschnitt m des Detektors j, i die Gesamtzahl der verwendeten Detektionseinheiten und n die Anzahl der Zeitabschnitte innerhalb der Zeitspur bezeichnet.

**12.** Verfahren nach mindestens einem der Ansprüche 1 bis 11, **dadurch gekennzeichnet, daß** Probenvolumen und Meßvolumen relativ zu einander bewegt werden.

**13.** Verfahren nach mindestens einem der Ansprüche 1 bis 12, **dadurch gekennzeichnet, daß** Systeme untersucht werden, in denen Partikel auftreten, deren Molekulargewicht sich um weniger als den Faktor 2 unterscheidet.

**Claims**

**1.** A method for the detection of association, dissociation, linking or cleaving reactions and conformational changes of analytes in a sample using coincidence analysis, wherein

- the sample contains at least two analytes labeled with different fluorescent dyes, and/or at least one analyte labeled with at least two different fluorescent dyes;

- the sample is illuminated by at least one laser for exciting the fluorescence emission of said at least two dyes;

- the fluorescent signals emitted by the sample which come from at least one measuring volume element V are detected by at least two detection units;

- the signals respectively detected in the detection units or time tracks derived therefrom are cut into arbitrary, but essentially simultaneous, time segments with freely selectable time channel widths;

- the number of signals contained in at least one time segment and/or the time intervals between signals within the time segments are established;

- for at least one time segment of the first detection unit, a coincidence analysis of the established data with at least one essentially simultaneous time segment of the second detection unit is performed;

- at least one statistical analysis of the results of the coincidence analysis is performed, and/or the results are subjected to a threshold analysis;

- said statistical analysis or at least one combination of several statistical analyses is evaluated for the presence of properties characteristic of an association, dissociation, linking or cleaving reaction or conformational change.

**2.** The method according to claim 1, **characterized in that** said time channel widths are greater than the longest fluorescence lifetime of said at least two dyes.

3. The method according to at least one of claims 1 and/or 2, **characterized in that** said time channel widths are smaller than the time required for said at least one sample molecule to pass through the measuring volume.

4. The method according to at least one of claims 1 to 3, **characterized in that** said detection units have different spectral detection sensibilities.

5. The method according to at least one of claims 1 to 4, **characterized in that** said measuring volume element V is $\leq 10^{-12}$ l.

6. The method according to at least one of claims 1 to 5, **characterized in that** said sample is illuminated by at least one laser which emits electromagnetic radiation of at least one wavelength which is capable of exciting said at least two dyes.

7. The method according to at least one of claims 1 to 6, **characterized in that** said coincidence analysis is performed on-line.

8. The method according to at least one of claims 1 to 7, **characterized in that** the time for performing the respective measurement is individually adjusted during the measurement.

9. The method according to at least one of claims 1 to 8, **characterized in that** the coincidence is established in the coincidence analysis by the amplitude G(0) of the cross-correlation.

10. The method according to at least one of claims 1 to 9, **characterized in that** the coincidence is established in the coincidence analysis through a logical AND switching operation.

11. The method according to at least one of claims 1 to 10, **characterized in that** the coincidence is established by multiplication according to the following formula:

$$K_i(n) = \frac{\sum_m \prod_j N(m,j)}{\prod_j \sum_m N(m,j)} \cdot n^{(i-1)},$$

wherein N(m,j) is the number of photons in time segment m of detector j; i is the total number of detection units employed; and n is the number of time segments within the time track.

12. The method according to at least one of claims 1 to 11, **characterized in that** the sample volume and the measuring volume are moved relative to one another.

13. The method according to at least one of claims 1 to 12, **characterized in that** systems are examined in which particles occur the molecular weights of which are different by less than a factor of two.

## Revendications

1. Procédé pour détecter des réactions d'association, de dissociation, de liaison ou de dédoublement, ainsi que des modifications de conformation d'analytes dans un échantillon, par une analyse des coincidences, dans lequel

- l'échantillon contient au moins deux analytes marqués par des colorants fluorescents différents et/ou au moins un analyte marqué par au moins deux colorants fluorescents différents,
- pour stimuler l'émission fluorescente d'au moins les deux colorants, on éclaire l'échantillon par au moins un laser,
- on détecte a l'aide d'au moins deux unités de détection les signaux de fluorescence provenant de l'échantillon et sortant d'au moins un élément de volume de mesure V,
- on décompose en fenêtres de temps quelconques, mais pour l'essentiel simultanées, ayant une largeur de canal des temps pouvant être choisie à volonté, les signaux détectés dans les différentes unités de détection, ou les traces des temps qui en dérivent,
- on détermine le nombre des signaux contenus dans une fenêtre des temps et/ou les intervalles de temps entre les signaux apparaissant dans les fenêtres des temps,
- pour au moins une fenêtre des temps de la première unité de détection, on procède à une analyse des coïncidences des données déterminées, avec au moins une fenêtre des temps, pour l'essentiel simultanée, de la deuxième unité de détection,
- on établit au moins une statistique des résultats de l'analyse des coïncidences, et/ou on soumet les résultats à une analyse des valeurs de seuil,
- on évalue ces statistiques, ou au moins une combinaison de plusieurs statistiques, en fonction de la présence de particularités caractéristiques d'une réaction d'association, de dissociation, de liaison ou de dédoublement, ou de modifications de conformation.

**2.** Procédé selon la revendication 1, **caractérisé en ce que** les largeurs des canaux des temps sont supérieures à la durée de vie de fluorescence la plus longue d'au moins les deux colorants.

**3.** Procédé selon au moins l'une des revendications 1 et/ou 2, **caractérisé en ce que** les largeurs des canaux des temps sont inférieures au temps de passage, dans le volume de mesure, d'au moins une molécule de l'échantillon.

**4.** Procédé selon au moins l'une des revendications 1 à 3, **caractérisé en ce que** les unités de détection présentent des sensibilités de détection spectrale différentes.

**5.** Procédé selon au moins l'une des revendications 1 à 4, **caractérisé en ce que** l'élément de volume de mesure V est $\leq 10^{-12}$ litres.

**6.** Procédé selon au moins l'une des revendications 1 à 5, **caractérisé en ce que** l'échantillon est éclairé par au moins un laser, qui émet un rayonnement électromagnétique ayant au moins une longueur d'onde, convenant à l'excitation d'au moins les deux colorants.

**7.** Procédé selon au moins l'une des revendications 1 à 6, **caractérisé en ce que** l'analyse des coïncidences est réalisée en ligne.

**8.** Procédé selon au moins l'une des revendications 1 à 7, **caractérisé en ce que** la durée de mise en oeuvre des différentes mesures est adaptée d'une manière individuelle pendant chaque mesure.

**9.** Procédé selon au moins l'une des revendications 1 à 8, **caractérisé en ce que**, dans le cadre de l'analyse des coïncidences, la coïncidence est déterminée par l'amplitude G(0) de la corrélation croisée.

**10.** Procédé selon au moins l'une des revendications 1 à 9, **caractérisé en ce que**, dans le cadre de l'analyse des coïncidences, on détermine la coïncidence par une liaison ET logique.

**11.** Procédé selon au moins l'une des revendications 1 à 10, **caractérisé en ce que** la coïncidence est déterminée par une multiplication utilisant la formule suivante :

$$K_i(n) = \frac{\sum_m \prod_j N(m,j)}{\prod_j \sum_m N(m,j)} \cdot n^{(i-1)}$$

dans laquelle N(m,j) est le nombre de photons dans la fenêtre des temps m du détecteur j, i est le nombre total des unités de détection utilisées, et n est le nombre des fenêtres des temps à l'intérieur de la trace des temps.

**12.** Procédé selon au moins l'une des revendications 1 à 11, **caractérisé en ce qu'**on déplace l'un par rapport à l'autre le volume de l'échantillon et le volume de mesure.

**13.** Procédé selon au moins l'une des revendications 1 à 12, **caractérisé en ce que** l'étude porte sur des systèmes dans lesquels apparaissent des particules dont la masse moléculaire se distingue par moins d'un facteur 2.

Fig. 1

Fig. 2

Fig. 3

Fig. 4

Fig. 5

Probe

Datenevaluierung mittels
Kreuzkorrelation

Objektiv

Dichroit.
Spiegel    Spiegel

Parallele
Laserstrahlen

Detektor 2

Linse    Linse

Detektor 1

Linse    Dichroit.  Loch-    Spiegel
         Spiegel   blende

Filter

Fig. 6

Fig. 7

Fig. 8

Fig. 9

Fig. 10

Fig. 11